# EUROPÄISCHE PATENTSCHRIFT

(11) **EP 1 818 289 B1**
(45) Veröffentlichungstag und Bekanntmachung des Hinweises auf die Patenterteilung: **02.01.2013**
(21) Anmeldenummer: 07000215.9
(22) Anmeldetag: 08.01.2007
(51) Int. Cl.: B65G 13/06

(54) **Rollenbahnförderer**
Roller conveyor
Convoyeur à rouleaux

(30) Priorität: 08.02.2006 DE 102006005983
(43) Veröffentlichungstag der Anmeldung: 15.08.2007
(73) Patentinhaber: Eisenmann AG, 71032 Böblingen (DE)
(72) Erfinder: Dingler, Günther, 75395 Ostelsheim (DE); Swoboda, Werner, 71032 Böblingen (DE); Gross, Erwin, 75392 Deckenpfronn (DE)
(74) Vertreter: Ostertag, Ulrich

(56) Entgegenhaltungen:
- EP-A1- 1 510 477
- EP-A2- 0 792 007
- WO-A-2005/019070
- US-A1- 2004 016 626

## Beschreibung

Die Erfindung betrifft einen Rollenbahnförderer mit
a) einer Vielzahl von in zwei parallelen Spuren angeordneten angetriebenen Rollenleisten;
b) einer Vielzahl von angetriebenen Rollen welche in den Rollenleisten angeordnet sind und eine Beschichtung mit hoher Reibwirkung tragen;
c) einer Vielzahl von Antriebsmotoren zum Antreiben der Rollen;
d) mindestens einer Spannungsquelle, aus welcher die Antriebsmotoren gespeist werden; wobei
e) die Rollenleisten auch nicht angetriebene Rollen umfassen, welche ein Profil mit beiderseitigen Spurkränzen aufweisen.

Rollenbahnförderer werden zum Transport von Warenträgern wie z. B. Paletten eingesetzt. In der Automobilindustrie werden mit ihnen häufig Fahrzeugkarosserien oder Teile von Fahrzeugkarosserien zwischen einzelnen Bearbeitungsstationen transportiert. Die Fahrzeugkarosserien sind dabei auf sog. "Skids" befestigt. Damit werden Transportgestelle bezeichnet, die zwei zu einander parallele Skidkufen aufweisen. Die Skidkufen liegen während des Fördervorganges auf Rollen des Rollenbahnförderers auf, die auf zwei Spuren und in Förderrichtung hintereinander angeordnet sind. Werden die Rollen in Drehung versetzt, wird der Skid mit der daran befestigten Fahrzeugkarosserie in Förderrichtung gefördert, wobei es ausreicht, nur einen Teil der Rollen mit einem Drehantrieb zu versehen.

Bekannte Rollenbahnförderer der eingangs genannten Art, wie sie derzeit vom Markt her bekannt sind, sind aus einzelnen Rollenbahnmodulen zusammengesetzt, die eine Mehrzahl von angetriebenen Rollen und jeweils einen einzigen elektrischen Antriebsmotor enthalten. Ein derartiger Rollenbahnförderer ist in EP 1 510 477 offenbart. Der Antriebsmotor ist in der Regel zwischen den beiden parallelen Spuren angeordnet, die aus Rollenleisten, in denen die Rollen aufgenommen sind, zusammengesetzt sind. Meist wird das vom Antriebsmotor erzeugte Drehmoment über Riemen auf die angetriebenen Rollen einer der beiden Rollenleisten verteilt. Diese Rollen sind über Achsen starr mit den Rollen auf der anderen Rollenleiste verbunden.

Die Zahl der Antriebsmotoren ist also bei diesen bekannten Rollenbahn-Förderern kleiner als die Anzahl der angetriebenen Rollen.

Die Spannung, mit welcher die Antriebsmotoren betrieben werden, stimmt mit der jeweils verfügbaren Netzspannung überein, liegt also im allgemeinen zwischen etwa 200 und etwa 600 Volt. Durch die verhältnismäßig hohe Betriebsspannung ist es erforderlich, erhebliche Sicherheitsvorkehrungen zu treffen, was mit Kosten verbunden ist. Verteuernd wirkt sich zudem aus, daß die Halbleiter-Bauelemente, an welche die hohe Betriebsspannung zu legen ist, vergleichsweise kostspielig sind und einen vergleichsweise hohen Verlustfaktor aufweisen.

Aufgabe der vorliegenden Erfindung ist es, einen Rollenbahnförderer der eingangs genannten Art zu schaffen, der insgesamt kostengünstiger in der Herstellung und im Betrieb ist.

Diese Aufgabe wird erfindungsgemäß dadurch gelöst, daß
f) jeder angetriebenen Rolle ein eigener Antriebsmotor zugeordnet ist;
g) die Antriebsmotoren als Niederspannungsmotoren und die mindestens eine Spannungsquelle als Niederspannungsquelle ausgebildet ist;
h) jeder angetriebenen Rolle auf der einen Spur eine nicht angetriebene Rolle auf der anderen Spur gegenüber liegt;
h) in jeder Rollenleiste angetriebene Rollen und nicht angetriebene Rollen abwechselnd angeordnet sind.

Bei dem erfindungsgemäßen Konzept eines Rollenbahnförderers werden nicht nur lästige Riemen- oder sonstige Transmissionsantriebe vermieden, indem jeder angetriebenen Rolle ein eigener Antriebsmotor zugeordnet ist. Die Verwendung einer Vielzahl von Antriebsmotoren, die jeder für sich eine vergleichsweise geringe Leistungsaufnahme besitzen, eröffnet zudem die Möglichkeit, Niederspannungsmotoren einzusetzen, ohne daß der jedem Antriebsmotor zuzuführende Strom übermäßig groß wird. Da für niedrige Betriebsspannungen keine so hohen Sicherheitsvorkehrungen getroffen werden müssen, ergeben sich kostenmäßige Vorteile. Halbleiter-Bauelemente, an welche nur geringe Betriebsspannungen gelegt werden, besitzen zudem kleinere Verluste und bedürfen daher auch geringerer Kühlung. Schließlich können die Leiterplatten, auf denen die steuernden Schaltungen aufgebaut sind, mit kleineren Leiterbahnabständen ausgestattet werden, was die Größe dieser Leiterplatten reduziert und es erleichtert, diese Leiterplatten z. B. direkt mit den Antriebsmotoren in einer Baueinheit zu integrieren.

Die Niederspannungsquelle sollte eine Spannung von höchstens 60 Volt abgeben. In diesem Spannungsbereich werden die oben angegebenen Vorteile der Niederspannungstechnik noch ausreichend erreicht. Bevorzugt wird, daß die Niederspannungsquelle eine Spannung von etwa 48 Volt abgibt. Günstig ist auch eine Spannung von etwa 24 V.

Dies deshalb, weil viele handelsübliche Schaltungskomponenten auf eine solche Betriebsspannung ausgelegt sind.

Besonders bevorzugt wird, wenn die Niederspannungsmotoren Gleichstrommotoren sind und die Niederspannungsquelle eine Gleichstromquelle ist. In diesem Falle ist es möglich, einen Teil der angetriebenen Rollen in einer Betriebsart "bremsen" zu betreiben, in welchem sie als Generatoren wirken und elektrischen Strom erzeugen.

Besonders kleine Baueinheiten aus Rollen und Antriebsmotoren erhält man dann, wenn die Niederspannungsmotoren Nabenmotoren sind.

Ausführungsbeispiele der Erfindung werden nachstehend anhand der Zeichnung näher erläutert; es zeigen
- Figur 1: perspektivisch eine Rollenleiste, die Teil eines Rollenbahnförderers ist;
- Figur 2: in schematischer Draufsicht und teilweise mit elektrischer Verkabelung ein erstes Ausführungsbeispiel eines Rollenbahnförderers;
- Figur 3: in einer Draufsicht ähnlich der Figur 2 ein zweites Ausführungsbeispiel eines Rollenbahnförderers.

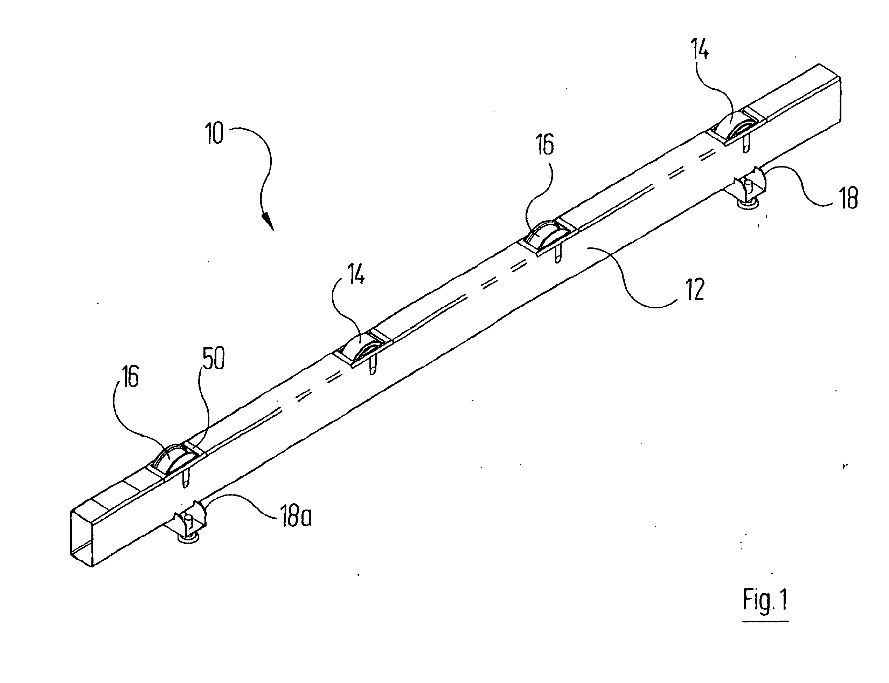

Zunächst wird auf Figur 1 Bezug genommen, in welcher eine insgesamt mit dem Bezugszeichen 10 bezeichnete Rollenleiste perspektivisch dargestellt ist. Die Rollenleiste 10 weist einen Längsträger 12 auf, der als Hohlprofil mit rechteckigem Querschnitt ausgebildet ist. In dem Längsträger 12 sind zwei angetriebene Rollen 14 und zwei nicht angetriebene Rollen 16 abwechselnd entlang der Längsrichtung angeordnet. Die angetriebenen Rollen 14 sind unprofiliert und tragen eine Beschichtung mit hoher Reibwirkung. Die nicht angetriebenen Rollen 16 haben ein Profil mit beiderseitigen Spurkränzen. Die Spurkränze bewirken eine Seitenführung der Kufen der zu transportierenden Skids.

Jeder der angetriebenen Rollen 14 ist ein eigener elektrischer Nabenantriebsmotor zugeordnet, der mit den Rollen 14 jeweils ein kompaktes Antriebsmodul bildet und selbst in der Zeichnung nicht erkennbar ist.

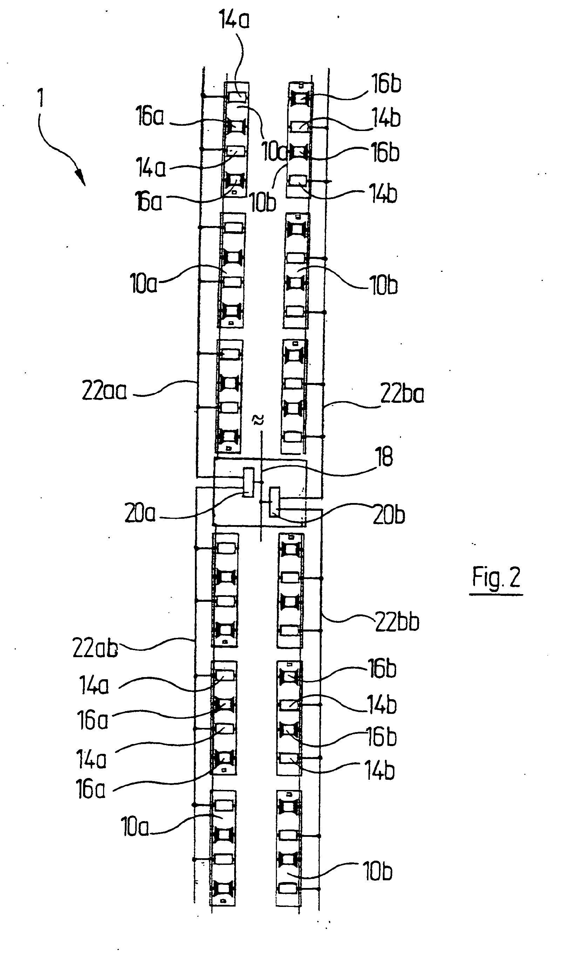

Ein Rollenbahnförderer 1 wird, wie der Figur 2 zu entnehmen ist, aus einer Vielzahl von Rollenleisten 10 der in Figur 1 dargestellten Art aufgebaut, indem diese Rollenleisten 10 in zwei parallelen Reihen oder "Spuren" angeordnet werden. Der Abstand zwischen den beiden Spuren von Rollenleisten 10 entspricht dem Abstand der Kufen der Skids, die auf dem Rollenbahnförderer 1 befördert werden sollen.

Die angetriebenen Rollen 14 der verschiedenen Rollenleisten 10 werden in folgender Weise mit elektrischer Energie versorgt:

Eine Leitung, auf welcher die am Aufstellungsort des Rollenbahnförderers vorhandene Netzspannung liegt, ist in Figur 2 mit dem Bezugszeichen 18 versehen. Zwei Gleichspannungs-Versorgungseinrichtungen 20a, 20b sind mit der Versorgungsleitung 18 verbunden und erzeugen an jeweils zwei Ausgängen eine Nieder-Gleichspannung von beispielsweise 24 Volt. Die eine dieser Gleichspannungs-Versorgungseinrichtungen 20a versorgt alle angetriebenen Rollen 14a in der einen der beiden Spuren des Rollenbahnförderers 1, während die andere der beiden Gleichspannungs-Versorgungseinrichtungen 20b die angetriebenen Rollen 14b der zweiten Spur speisen.

Der eine Ausgang der Gleichspannungs-Versorgung 20a ist über eine Leitung 22aa mit allen angetriebenen Rollen 14a verbunden, die sich, von den Gleichspannungs-Versorgungseinrichtungen 20a, 20b aus gesehen, auf einer Seite von diesen befinden, während der zweite Ausgang der Gleichspannungs-Versorgungseinrichtung 20a über eine Leitung 22ab mit allen angetriebenen Rollen 14a verbunden ist, die sich auf der gegenüberliegenden Seite der Gleichspannungs-Versorgungseinrichtungen 20a, 20b befinden.

In entsprechender Weise ist einer der beiden Ausgänge der Gleichspannungs-Versorgungseinrichtung 20b über eine Leitung 22ba mit allen angetriebenen Rollen 14b der zweiten Spur des Rollenbahnförderers 1 verbunden, die sich, gesehen von den Gleichspannungs-Versorgungseinrichtungen 20a, 20b, auf einer Seite von diesen befinden, während der zweite Ausgang der Gleichspannungs-Versorgungseinrichtung 20b über eine Leitung 22bb alle angetriebenen Rollen 14b der in Figur 2 rechten Spur speist, die sich auf der gegenüberliegenden Seite der Gleichspannungs-Versorgungseinrichtungen 20a, 20b befinden.

Die Verwendung von mit Niederspannung betriebenen Naben-Antriebsmotoren bringt eine ganze Reihe von Vorteilen mit sich:

Im Vordergrund steht dabei die Tatsache, daß die Sicherheitsanforderungen in diesem Falle erheblich niedriger sind, als dies bei einer mit voller Netzspannung arbeitenden Antriebstechnik der Fall wäre. Auf diese Weise ergeben sich Einsparungen bei der Installationstechnik. Auch die Halbleiterbauteile, die in den Gleichspannungs-Versorgungseinrichtungen 20a, 20b und in den Steuerungskomponenten der angeriebenen Rollen 14 zur Anwendung kommen, sind erheblich preisgünstiger. Die Leiterbahnen auf den Leiterplatten brauchen zur Vermeidung von Spannungsüberschlägen keine so großen Sicherheitsabstände von einander einzuhalten, so daß die Leiterplatten selbst kleiner werden und ohne weiteres z. B. in ein kompaktes Antriebsmodul mit angetriebener Rolle 14 und entsprechenden Steuerungskomponenten integriert werden können. Die angetriebenen Rollen 14 können in einem Bremsbetrieb als Generatoren verwendet werden, so daß elektrische Energie eingespart werden kann. Schließlich entstehen in Niederspannungs-Schaltungskomponenten auch geringere Verluste, so daß erneut ein Energiespareffekt auftritt und nur kleine Kühlflächen benötigt werden.

Da die Gleichspannungs-Versorgungseinrichtungen 20a, 20b doppelt vorhanden sind, besitzt der Rollenbahnförderer 1 eine "Notlaufeigenschaft" für den Fall, daß in einem der beiden Antriebsstränge, die von den Gleichspannungs-Versorgungseinrichtungen 20a, 20b gespeist werden, ein Fehler auftritt. Der jeweils intakte "Antriebsstrang" kann dann für eine gewisse Zeit die volle Antriebsfunktion übernehmen, wobei allenfalls in der Beschleunigung und in der Geschwindigkeit gewisse Abstriche in Kauf genommen werden müssen.

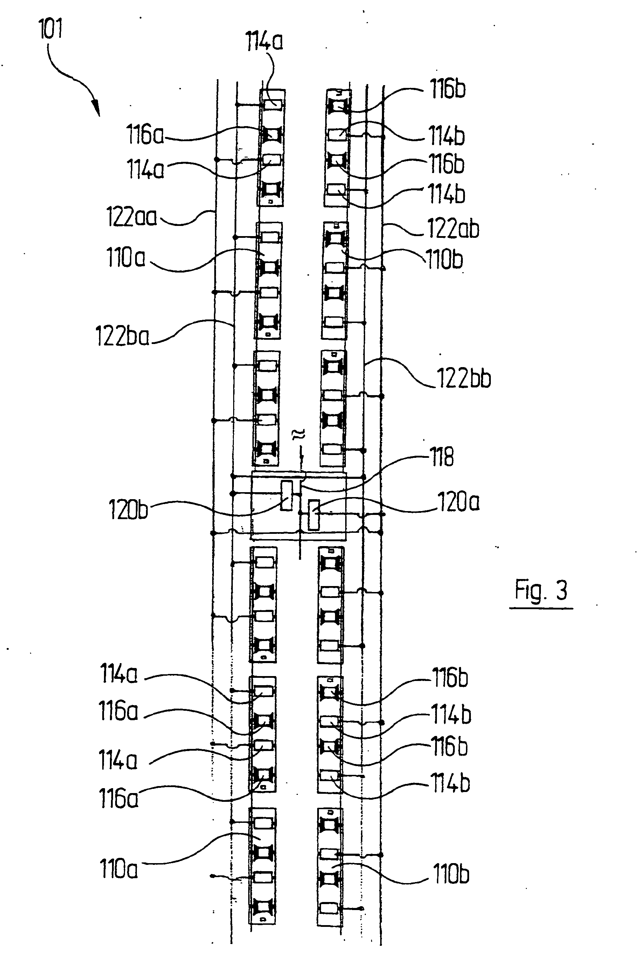

Das in Figur 3 dargestelle Ausführungsbeispiel eines Rollenbahnförderers 101 ähnelt demjenigen, das oben anhand der Figur 2 erläutert wurde, sehr. Entsprechende Teile sind daher mit denselben Bezugszeichen zuzüglich 100 gekennzeichnet.

Auch der Rollenbahnförder 101 der Figur 3 ist aus einer Vielzahl von Rollenleisten 110 aufgebaut, wie sie in Figur 1 dargestellt sind. Insoweit unterscheidet sich der mechanische Aufbau des Ausführungsbeispiels der Figur 3 nicht von demjenigen der Figur 2. Allerdings werden die verschiedenen angetriebenen Rollen 114a, 114b in den beiden Spuren des Rollenbahnförderers 101 anders gespeist.

Wie der Figur 3 zu entnehmen ist, erstrecken sich entlang beider Spuren des Rollenbahnförderers 101 der Figur 3 jeweils zwei niedrige Gleichspannung führende Leitungen 122aa und 122ba bzw. 122ab und 122bb. Die Versorgungsleitungen 122aa und 122ab sind beide mit einer der beiden Gleichspannungs-Versorgungseinrichtungen 220a verbunden, während die beiden Versorgungsleitungen 122ba und 122bb mit der zweiten Gleichspannungs-Versorgungseinrichtung 120b in Verbindung stehen.

Wie Figur 3 zeigt, sind alle angetriebenen Rollen 114a der linken Spur des Rollenbahnförderers 101 abwechselnd einmal mit der Versorgungsleitung 122aa und das andere Mal mit der Versorgungsleitung 122ba verbunden. Dies hat zur Folge, daß in jeder der Rollenleisten 110 sich jeweils eine angetriebene Rolle 114 befindet, die aus der einen Gleichspannungs-Versorgungseinrichtung 120a gespeist wird, und eine angetriebene Rolle 114, die aus der anderen Gleichspannungs-Versorgungseinrichtung 120b gespeist wird.

Ähnlich liegen die Verhältnisse in der in Figur 3 rechten Spur des Rollenbahnförderers 101. Auch hier sind die angetriebenen Rollen 114 abwechselnd mit der Leitung 122ab und der Leitung 122bb, letztendlich also abwechselnd der Gleichspannungs-Versorgungseinrichtung 120a und der Gleichspannungs-Versorgungseinrichtung 120b verbunden.

Fällt bei der Ausführungsform des Rollenbahnförderers 101 in Figur 3 einer der elektrischen "Antriebsstränge", beispielsweise eine der beiden Gleichspannungs-Versorgungseinrichtungen 120a, 120b aus, so ist, ähnlich wie beim Ausführungsbeispiel der Figur 2, ein Notbetrieb des Rollenbahnförderers 101 möglich. Während jedoch beim Ausführungsbeispiel der Figur 2 dann ausschließlich in einer Spur des Rollenbahnförderers 1 Antriebskräfte vorliegen, finden sich beim Ausführungsbeispiel der Figur 3 auch bei Ausfall eines "Antriebsstranges" in beiden Spuren noch angetriebene Rollen 114. Dies begünstigt den Geradauslauf der Skids im Notbetrieb.

Die Ansteuerung der verschiedenen angetriebenen Rollen 2 erfolgt über ein industrieübliches Bussystem.

## Patentansprüche

1. Rollenbahnförderer (1, 101), eignet zur Beförderung von Skids, mit
a) einer Vielzahl von in zwei parallelen Spuren angeordneten Rollenleisten
b) einer Vielzahl von angetriebenen Rollen (14; 114), welche in den Rollenleisten (10; 11) angeordnet sind und eine Beschichtung mit hoher Reibwirkung tragen;
c) einer Vielzahl von Antriebsmotoren zum Antreiben der Rollen (14; 114);
d) mindestens einer Spannungsquelle (20a, 20b; 120a,
120b), aus welcher die Antriebsmotoren gespeist werden, wobei
e) die Rollenleisten (10; 110) auch nicht angetriebene Rollen (16; 116) umfassen, welche ein Profil mit beiderseitigen Spurkränzen aufweisen;
**dadurch gekennzeichnet, dass**
f) jeder angetriebenen Rolle (14; 114) ein eigener Antriebsmotor zugeordnet ist;
g) die Antriebsmotoren als Niederspannungsmotoren und die mindestens eine Spannungsquelle (20a, 20b; 120a, 120b) als Niederspannungsquelle ausgebildet sind;
h) jeder angetriebenen Rolle (14; 114) auf der einen Spur eine nicht angetriebene Rolle (16; 116) auf der anderen Spur gegenüberliegt;
i) in jeder Rollenleiste (10; 110) angetriebene Rollen (14) und nicht angetriebene Rollen (16) abwechselnd angeordnet sind.

2. Rollenbahnförderer nach Anspruch 1, **dadurch gekennzeichnet, daß** die Niederspannungsquelle (20a, 20b; 120a, 120b) eine Spannung von höchstens 60 V abgibt.

3. Rollenbahnförderer nach Anspruch 2, **dadurch gekennzeichnet, daß** die Niederspannungsquelle (20a, 20b; 120a, 120b) eine Spannung von etwa 48 V abgibt.

4. Rollenbahnförderer nach Anspruch 2, **dadurch gekennzeichnet, daß** die Niederspannungsquelle (20a, 20b; 120a, 120b) eine Spannung von etwa 24 V abgibt.

5. Rollenbahnförderer nach einem der vorhergehenden
Ansprüche, **dadurch gekennzeichnet, daß** die Niederspannungsmotoren Gleichstrommotoren sind und die Niederspannungsquelle (20a, 20b; 120a, 120b) eine Gleichstromquelle ist.

6. Rollenbahnförderer nach einem der vorhergehenden
Ansprüche, **dadurch gekennzeichnet, daß** die Niederspannungsmotoren Nabenmotoren sind, die mit den angetriebenen Rollen (14; 114) eine Baueinheit bilden.

## Claims

1. Roller conveyer (1, 101) suitable for the transport of skids, comprising
a) a plurality of roller rails disposed in two parallel tracks (10; 110);
b) a plurality of driven rollers (14; 114) which are disposed in the roller rails (10; 110) and carry a high-friction coating;
c) a plurality of drive motors for driving the rollers (14; 114);
d) at least one voltage source (20a, 20b; 120a, 120b), from which the drive motors are supplied,
whereas
e) the roller rails (10; 110) also comprise non-driven rollers (16; 116), which have a profile with wheel flanges on both sides;
**characterised in that**,
f) each of the driven rollers (14; 114) is associated with an individual drive motor;
g) the drive motors are low voltage motors and at least one voltage source (20a, 20b; 120a, 120b) is constructed as a low voltage source;
h) each driven roller (14; 114) on the one track lies opposite a non-driven roller (16; 116) on the other track;
i) in each roll rail (10; 110) driven rollers (14) and non-driven rollers (16) are arranged alternatively.

2. Roller conveyor according to claim 1, **characterized in that** the low voltage source (20a, 20b; 120a, 120b) supplies a voltage of at most 60 V.

3. Roller conveyor according to claim 2, **characterized in that** the low voltage source (20a, 20b; 120a, 120b) supplies a voltage of approximately 48 V.

4. Roller conveyor according to claim 2, **characterized in that** the low voltage source (20a, 20b; 120a, 120b) supplies a voltage of approximately 24 V.

5. Roller conveyor according to one of the preceding claims, **characterized in that** the low voltage motors are d.c. motors and the low voltage source (20a, 20b; 120a, 120b) is a direct current source.

6. Roller conveyor according to one of the preceding claims, **characterized in that** the low voltage motors are hub motors, which with the driven rollers (14; 114) form a sub-assembly.

## Revendications

1. Convoyeur (1 ; 101) à rouleaux, dévolu au convoyage de chevalets de transport et comprenant :
a) une multiplicité de barrettes (10 ; 110) à rouleaux, agencées en deux voies parallèles ;
b) une multiplicité de rouleaux entraînés (14 ; 114), qui sont logés dans lesdites barrettes (10 ; 110) à rouleaux et portent un revêtement à fort effet de frottement ;
c) une multiplicité de moteurs d'entraînement conçus pour entraîner lesdits rouleaux (14 ; 114) ;
d) au moins une source de tension (20a, 20b ; 120a, 120b) à partir de laquelle
lesdits moteurs d'entraînement sont alimentés,
sachant que
e) lesdites barrettes (10 ; 110) à rouleaux renferment également des rouleaux (16 ; 116) non entraînés, offrant un profil à couronnes d'alignement disposées de part et d'autre ; **caractérisé par le fait**
f) **qu'**un propre moteur d'entraînement est affecté à chaque rouleau entraîné (14 ; 114) ;
g) **que** les moteurs d'entraînement sont réalisés sous la forme de moteurs à basse tension et la source de tension (20a, 20b ; 120a, 120b), à présence minimale, est réalisée sous la forme d'une source de basse tension ;
h) **que** chaque rouleau entraîné (14 ; 114) situé sur l'une des voies comporte, en vis-à-vis, un rouleau (16 ; 116) non entraîné et situé sur l'autre voie ;
i) **que** des rouleaux entraînés (14), et des rouleaux (16) non entraînés, sont disposés en alternance dans chaque barrette (10 ; 110) à rouleaux.

2. Convoyeur à rouleaux selon la revendication 1, **caractérisé par le fait que** la source de basse tension (20a, 20b ; 120a, 120b) fournit une tension de 60 V au maximum.

3. Convoyeur à rouleaux selon la revendication 2, **caractérisé par le fait que** la source de basse tension (20a, 20b ; 120a, 120b) fournit une tension d'environ 48 V.

4. Convoyeur à rouleaux selon la revendication 2, **caractérisé par le fait que** la source de basse tension (20a, 20b ; 120a, 120b) fournit une tension d'environ 24 V.

5. Convoyeur à rouleaux selon l'une des revendications précédentes, **caractérisé par le fait que** les moteurs à basse tension sont des moteurs à courant continu, et la source de basse tension (20a, 20b ; 120a, 120b) est une source de courant continu.

6. Convoyeur à rouleaux selon l'une des revendications précédentes, **caractérisé par le fait que** les moteurs à basse tension sont des moteurs à moyeux, qui forment un ensemble structurel unitaire avec les rouleaux entraînés (14 ; 114).
